# EUROPEAN PATENT SPECIFICATION

(11) **EP 2 990 965 B1**
(45) Date of publication and mention of the grant of the patent: **17.10.2018**
(21) Application number: 15182455.4
(22) Date of filing: 26.08.2015
(51) Int. Cl.: G06F 17/30

(54) **VERSATILE DATA MODEL**
VIELSEITIGES DATENMODELL
MODÈLE DE DONNÉES POLYVALENT

(30) Priority: 29.08.2014 US 201414472932
(43) Date of publication of application: 02.03.2016
(73) Proprietor: Accenture Global Services Limited, Dublin 4 (IE)
(72) Inventor: CARROLL, Dennis, Leander, TX 78641 (US); LYNCH, Cecil, Granite Bay, CA 95746 (US); ACUNA, German, Austin, TX 78756 (US); VO, Anh-Hoang, Austin, TX 78732 (US); PERRY, Thomas D., Vienna, VA 22182 (US)
(74) Representative: Conroy, John

(56) References cited:
- EP-A2- 2 369 506
- US-A1- 2008 195 643
- US-A1- 2009 300 062
- US-A1- 2009 319 546
- US-A1- 2011 131 253
- US-A1- 2011 197 119

## Description

### BACKGROUND

Data models can provide a description of one or more objects to be represented by a computer system together with object properties and relationships between objects. In some examples, objects within the data model can represent "real world" objects, such as companies, customers, addresses, demographics, orders, prices, goods, and the like. Data models can be used to define the manner in which data is stored and used. In some examples, the data model provides an extract, transform and load (ETL) strategy, which represents a way to populate a database for use. In some cases, data models are updated, which can require the database to be deleted and recreated, and can require a revision to the ETL strategy. Further, updates to data models can require users with specialized skills to perform the update and recreate the database. Consequently, overhead can be required in terms of resources (e.g., processors, memory) and/or man hours to update the data model and revise the ETL strategy.

US 2011/131253A1 discloses a computer-implemented method of performing schema matching. The method includes storing, by a computer system, a schema mapping that includes nodes. The schema mapping indicates a relationship between a first schema and a second schema. The method includes displaying, at a first node of the plurality of nodes, a graphical indication of the schema mapping at the first node. The method includes receiving, by the computer system, an evaluation of the schema mapping at the first node according to a user evaluating the graphical indication. The method includes adjusting the schema mapping as a result of the user evaluating the graphical indication. The method includes stepping, by the computer system, to a second node of the plurality of nodes. The method includes further displaying, receiving and adjusting the schema mapping as related to the second node.

US 2009/0319546 teaches about techniques for extracting hierarchical data stored in multiple records, flattening the hierarchical data, and storing the flattened data in a data warehouse. The flattened hierarchy data comprises data identifying hierarchical paths in the input hierarchy.

### SUMMARY

The present invention is defined by the claims. Implementations of the present disclosure include computer-implemented methods for modeling data. In some implementations, actions include receiving a data model, the data model including a hierarchical tree structure including a plurality of nodes, the plurality of nodes comprising a plurality of data nodes, a plurality of key nodes and one or more foreign key nodes, each foreign key node referencing a respective key node, receiving a data file, the data file including a table having a plurality of columns and a plurality of data values, receiving user input, the user input associating nodes of the plurality of nodes with respective columns of the plurality of columns, and processing the data model, the data file and the user input to provide a populated data model, the populated data model including: a data content table having one or more navigation columns and one or more content columns, at least one navigation column including one or more key values of a foreign key node, and the one or more relationship columns associating at least one key node of the data content table to a respective foreign key node. Other implementations of this aspect include corresponding systems, apparatus, and computer programs, configured to perform the actions of the methods, encoded on computer storage devices.

These and other implementations can each optionally include one or more of the following features: within the data content table and for a particular row, a plurality of navigation columns include respective key values of respective key nodes in an order based on a navigation path within the hierarchical tree structure; within the foreign key table and for a particular row, a plurality of navigation columns include respective key values of respective foreign key nodes in an order based on a navigation path within the hierarchical tree structure; each key value indicates a keyed relationship that relates a first node of the plurality of nodes to a second node of the plurality of nodes, wherein a data value from the first node is used to retrieve target data; the data value of the first node contains an identifier assigned to the second node and metadata for retrieving the target data; each node of the plurality of nodes has a respective identifier, the identifier representing a navigation path to the respective node in the hierarchical tree structure; and the user input is received through a drag-and-drop interface, through which a user drags nodes from a graphical depiction of the data model and drops the nodes on respective columns of a graphical depiction of the data file to associate columns of the data file with respective nodes in the data model.

Implementations of the present disclosure provide one or more of the following advantages. In some examples, implementations of the present disclosure enable updates to the data model (e.g., a change in the design of the data model) without requiring data description language (DDL) changes to the hosting relational database product (e.g., SQL Server, DB2, etc.), and without requiring a user having special database design skills. Further, implementations of the present disclosure enable the data model to be updated without requiring the deletion of existing content, and/or recreation of the database.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### BRIEF DESCRIPTION OF DRAWINGS

FIG. 1 depicts an example system that can execute implementations of the present disclosure.
FIG. 2 depicts an example data model including a hierarchical tree structure.
FIG. 3A depicts an example mapping between a data content table and the example data model of FIG. 2.
FIG. 3B depicts an example mapping between a foreign key table and the example data model of FIG. 2.
FIGs. 4A and 4B represent an example populated data model and respectively depict portions of an example data content table and an example foreign key table based on the example data model of FIG. 2.
FIG. 5 depicts an example process that can be executed in implementations of the present disclosure.

### DETAILED DESCRIPTION

Implementations of the present disclosure are generally directed to providing a versatile data model. In some implementations, the versatile data model is provided as a populated data model that is based on a data model having a hierarchical tree structure, and that includes a data content table and a foreign key table. In some examples, the data model includes a plurality of nodes including one or more key nodes, one or more data nodes, one or more foreign key nodes, one or more hierarchical relationships between nodes, and one or more keyed relationships, each keyed relationship is provided between a foreign key node and a key node. A hierarchy provided by the hierarchical tree structure is represented in the data content table and the foreign key table. In accordance with implementations of the present disclosure, the data content table includes one or more navigation columns and one or more content columns. In some examples, at least one navigation column includes one or more key values of a key node of the data model, and at least one content column includes data values of a plurality of data values. Also in accordance with implementations of the present disclosure, the foreign key table includes one or more navigation columns and one or more relationship columns. In some examples, at least one navigation column includes one or more key values of a foreign key node of the data model, and the one or more relationship columns associating at least one key node of the data content table to a respective foreign key node.

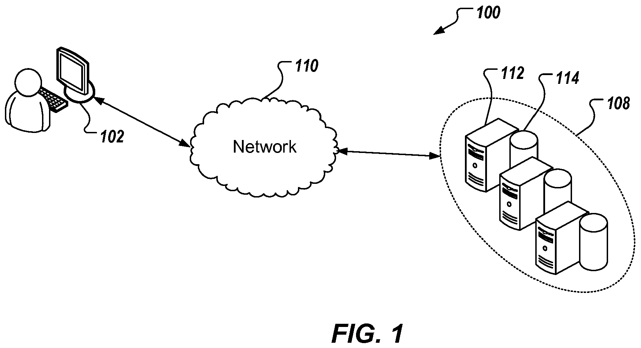

FIG. 1 depicts an example system 100 that can execute implementations of the present disclosure. In the depicted example, the system 100 includes a computing device 102 that communicates with a server system 108 over a network 110. In some examples, the computing device 102 can represent various forms of processing devices including, but not limited to, a desktop computer, a laptop computer, a tablet computer, a handheld computer, a personal digital assistant (PDA), a cellular telephone, a network appliance, a camera, a smart phone, an enhanced general packet radio service (EGPRS) mobile phone, a media player, a navigation device, an email device, a game console, or a combination of any two or more of these data processing devices or other data processing devices. As discussed in further detail herein, the computing device 102 can interact with software executed by the server system 108.

In some implementations, the server system 108 can include one or more servers 112 and databases 114. In some examples, the servers 112 can represent various forms of servers including, but not limited to a web server, an application server, a proxy server, a network server, or a server farm. For example, the servers 112 can be application servers that execute software accessed by computing devices 102, 104. In operation, multiple computing devices 102, 104 (e.g., clients) can communicate with the servers 112 by way of the network 110. In some implementations, a user can invoke applications available on the servers 112 in a user-interface application (e.g., a web browser) running on the computing device 102. Each application can individually access data from one or more repository resources (e.g., databases 114).

In some implementations, the system 100 can be a distributed client/server system that spans one or more networks such as network 110. The network 110 can be a large computer network, such as a local area network (LAN), wide area network (WAN), the Internet, a cellular network, or a combination thereof connecting any number of mobile clients, fixed clients, and servers. In some implementations, each client (e.g., computing device 102) can communicate with the server system 108 through a virtual private network (VPN), Secure Shell (SSH) tunnel, or other secure network connection. In some implementations, the network 110 can include the Internet, a wireless service network, and may include the Public Switched Telephone Network (PSTN). In other implementations, the network 110 may include a corporate network (e.g., an intranet) and one or more wireless access points.

Implementations of the present disclosure are described herein with reference to a non-limiting, example context. The example context includes business data associated with an insurance company. It is appreciated, however, that implementations of the present disclosure are applicable in other contexts and/or with other data and/or industries. Other example data can include patient data in a medical context (e.g., hospital, clinic).

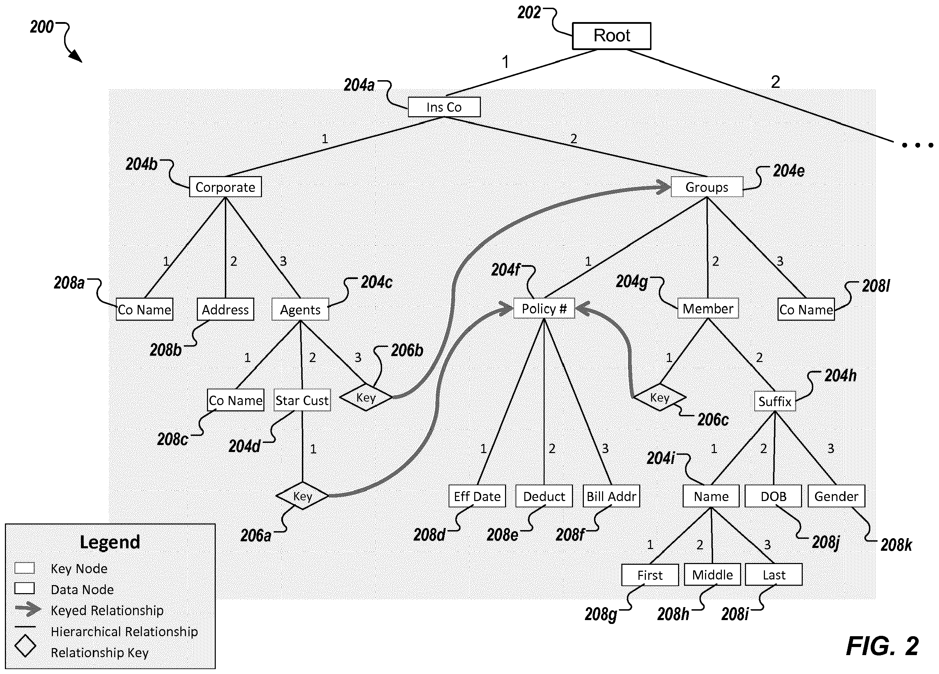

FIG. 2 depicts an example data model 200 including a hierarchical tree structure. The example data model 200 includes a root node 202, a plurality of intermediate nodes 204a, 204b, 204c, 204d, 204e, 204f, 204g, 204h, 204i, a plurality of foreign key nodes 206a, 206b, 206c, and a plurality of leaf nodes 208a, 208b, 208c, 208d, 208e, 208f, 208g, 208h, 208i, 208j, 208k, 2081. In the depicted example, the intermediate nodes 204c, 204d, 204e, 204f, 204g, 204h are key nodes. In some examples, a key node has a key value (e.g., an identifier) associated therewith, which key value can be used to identify entities (e.g., agents, policies, patients). In some examples, a foreign key node (e.g., the diamond-shaped nodes of FIG. 2) draws a connection, or relationship, between otherwise unrelated parts of the hierarchical tree structure.

Hierarchical relationships are provided between nodes, and respective keyed relationships are provided between foreign key nodes and respective key nodes. In the example of FIG. 2, a keyed relationship is provided between foreign key node 206a and the intermediate node (key node) 204f, a keyed relationship is provided between foreign key node 206b and the intermediate node (key node) 204e, and a keyed relationship is provided between foreign key node 206c and the intermediate node (key node) 204f. Leaf nodes are provided as data nodes, wherein one or more data values are associated with a leaf node. In the depicted example, data values are associated with each leaf node 208a, 208b, 208c, 208d, 208e, 208f, 208g, 208h, 208i, 208j, 208k, 2081, as described in further detail herein.

In some implementations, and as depicted in FIG. 2, each hierarchical relationship can be associated with an identifier. In the example of FIG. 2, the hierarchical relationship between the root node 202 and the intermediate node 204a is provided as "1," the hierarchical relationship between the intermediate node 204a and the intermediate node 204b is provided as "1," the hierarchical relationship between the intermediate node 204b and the leaf node 208a is provided as "1," and the hierarchical relationship between the intermediate node 204b and the leaf node 208b is provided as "2." In some examples, a node can be associated with an object identifier (OID) that can be used to locate the node within the hierarchical tree structure. Each OID is based on one or more identifiers of the hierarchical relationships. For example, the intermediate node 204a can be associated with the OID 1, the intermediate node 204b can be associated with the OID 1.1, the leaf node 208a can be associated with the OID 1.1.1, and the leaf node 208b can be associated with the OID 1.1.2. In general, each OID represents a navigation path through the hierarchical tree structure from the root node to get to the respective node. For example, to get to the lead node 208b from the root node 202, the path includes the hierarchical relationship between the root node 202 and the intermediate node 204a, which is provided as "1," the hierarchical relationship between the intermediate node 204a and the intermediate node 204b, which is provided as "1," and the hierarchical relationship between the intermediate node 204b and the leaf node 208b, which is provided as "2," hence the OID 1.1.2 being assigned to the leaf node 208b. As another example, the leaf node 208j is assigned the OID 1.2.2.2.2.

Although, as described above and as depicted in the example of FIG. 2, the identifiers and the resulting OIDs include number values, it is appreciated that the identifiers and the resulting OIDs can include textual values, e.g., string values. For example, the hierarchical relationship between the root node 202 and the intermediate node 204a could be provided as "root→insco," the hierarchical relationship between the intermediate node 204a and the intermediate node 204b is provided as "insco→corporate," and the hierarchical relationship between the intermediate node 204b and the leaf node 208b is provided as "corporate→address." For example, the leaf node 208b could be assigned the OID root→insco→corporate→address. Accordingly, OIDs can be based on labels assigned to nodes (e.g., node names) as the nodes are encountered in the respective navigation path.

It is appreciated that an identifier assigned to a navigation path to a respective node is universally unique. That is, each identifier is unique with respect to all other identifiers. However, it is also appreciated that individual hierarchical relationships that make up the identifier are not required to be unique. For example, and as described above, the leaf node 208j is assigned the OID 1.2.2.2.2, which is unique among all OIDs assigned to nodes of the example data model 200. However, the OID 1.2.2.2.2 is based on at least four hierarchical relationships, each being designated as "2."

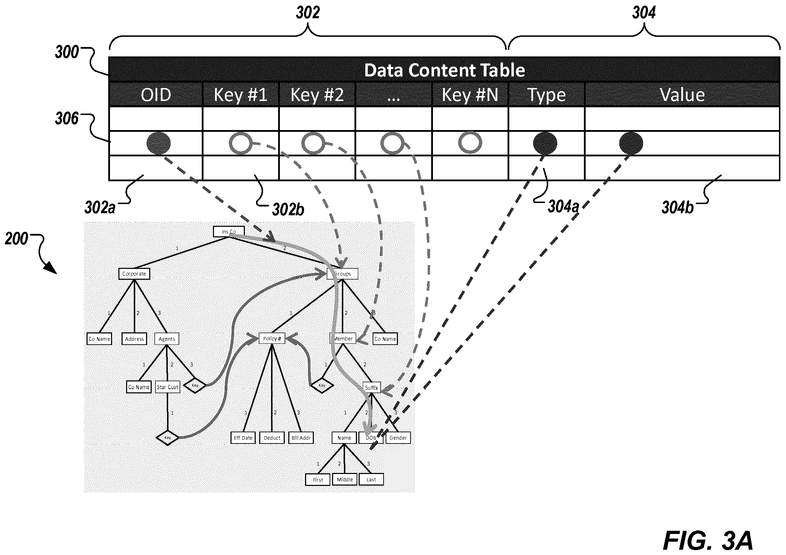

FIG. 3A depicts an example mapping between a data content table 300 and the example data model 200 of FIG. 2. The data content table 300 includes a plurality of navigation columns 302 and a plurality of content columns 304. The navigation columns include an OID column 302a, and a plurality of key columns 302b. The content columns 304 include a type column 304a and a value column 304b. In some examples, each row 306 of the data content table 300 is associated with a respective node of the underlying data model (e.g., the example data model 200 in the depicted example). For a given row 306, a respective cell of the OID column 302a is populated with the OID of a respective node, and respective cells of none or more of the key columns 302b are populated with key values based on the navigation path through the hierarchical tree structure of the underlying data structure. More particularly, the respective cells of the key columns 302b are populated with key values in order as one or more key nodes are encountered along the navigation path to the respective node.

For example, for the row 306, the cell of the OID column 302a is populated with the OID 1.2.2.2.2 assigned to the leaf node 208j, and cells of three of the key columns 302b are populated with key values of the key nodes 204e, 204g, 204h in the order that the key nodes 204e, 204g, 204h are encountered along the navigation path to the leaf node 208j. That is, for example, the respective cell of navigation column "Key#1" is populated with a key value of the key node 204e, because it is encountered first along the navigation path, the respective cell of navigation column "Key#2" is populated with a key value of the key node 204g, because it is encountered second along the navigation path, and the respective cell of navigation column "Key#3" is populated with a key value of the key node 204h, because it is encountered third along the navigation path. Only the respective cells of the navigation columns "Key#1," "Key#2," and "Key#3" are populated in this example, because only three key nodes (the key nodes 204e, 204g, 204h are encountered along the navigation path to the leaf node 208j.

For a given row 306, a respective cell of the type column 304a is populated with a type of content that populates the respective cell of the content column 304b. Example types can include string, number, key, date among any other appropriate types. For example, for row 306, the respective cell of the type column 304a can include date, because the leaf node 208j is associated with date-of-birth (DOB), and the respective cell of the content column can include a date value (e.g., 08/08/1973).

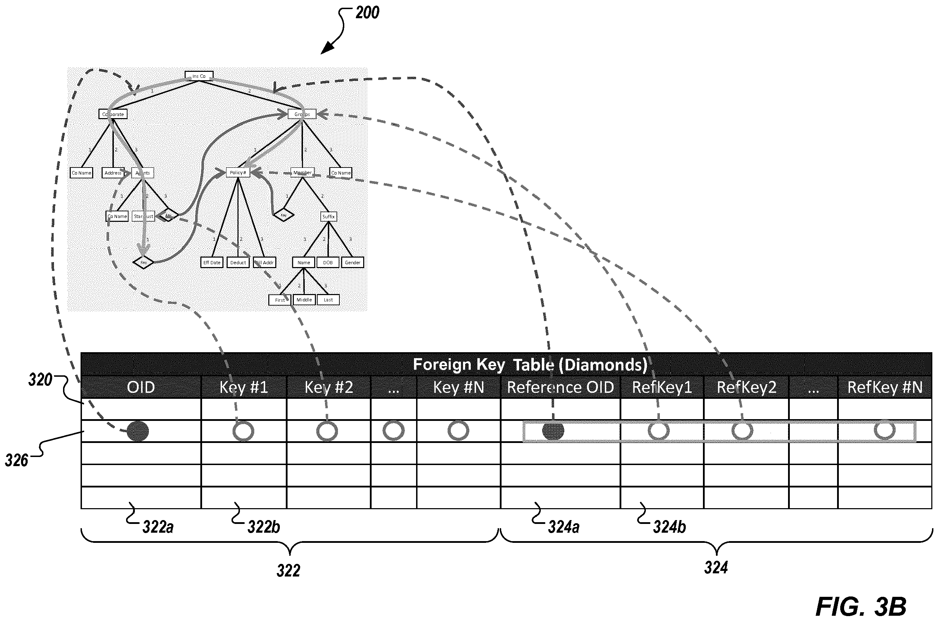

FIG. 3B depicts an example mapping between a foreign key table 320 and the example data model 200 of FIG. 2. The foreign key table 320 includes a plurality of navigation columns 322 and a plurality of relationship columns 324. The navigation columns include an OID column 322a, a plurality of key columns 322b. The relationship columns 324 include a reference OID column 324a and a plurality of reference key columns 324b. In some examples, each row 326 of the foreign key table 320 is associated with a respective foreign key node of the underlying data model (e.g., the example data model 200 in the depicted example). For a given row 326, a respective cell of the OID column 322a is populated with the OID of a respective foreign key node and respective cells of none or more of the key columns 322b are populated with key values based on the navigation path through the hierarchical tree structure of the underlying data structure. More particularly, the respective cells of the key columns 322b are populated with key values in order as one or more key nodes are encountered along the navigation path to the respective foreign key node, as identified by the OID provided in column 322a.

For example, for the row 326, the cell of the OID column 322a is populated with the OID 1.1.3.2.1 assigned to the foreign key node 206a, and cells of two of the key columns 322b are populated with key values of the key nodes 204c, 204d in the order that the key nodes 204c, 204d are encountered along the navigation path to the foreign key node 206a. That is, for example, the respective cell of navigation column "Key#1" is populated with a key value of the key node 204c, because it is encountered first along the navigation path, and the respective cell of navigation column "Key#2" is populated with a key value of the key node 204d, because it is encountered second along the navigation path. Only the respective cells of the navigation columns "Key#1" and "Key#2" are populated in this example, because only two key nodes (the key nodes 204c, 204d are encountered along the navigation path to the foreign key node 206a.

For a given row 326, a respective cell of the reference OID column 324a is populated with the OID of a respective key node that the respective foreign key node points to. Further, respective cells of none or more of the reference key columns 324b are populated with key values based on the navigation path through the hierarchical tree structure of the underlying data structure to the respective key node. More particularly, the respective cells of the reference key columns 324b are populated with key values in order as one or more key nodes are encountered along the navigation path to the respective key node.

For example, for the row 326, the cell of the reference OID column 324a is populated with the OID 1.2.1 assigned to the key node 204f, and cells of two of the reference key columns 324b are populated with key values of the key nodes 204e, 204f in the order that the key nodes 204e, 204f are encountered along the navigation path. That is, for example, the respective cell of reference key column "RefKey#1" is populated with a key value of the key node 204e, because it is encountered first along the navigation path, and the respective cell of navigation column "RefKey#2" is populated with a key value of the key node 204f (the key node referenced by the foreign key node), because it is encountered second along the navigation path. Only the respective cells of the navigation columns "RefKey#1" and "RefKey#2" are populated in this example, because only two key nodes (the key nodes 204e, 204f are encountered along the navigation path to the key node 204f.

In some implementations, and as described herein, a populated data model is provided based on a data model, data values, and user input. More particularly, and in some examples, the populated data model includes a data content table and a foreign key table, described in detail herein. In some examples, and as described in further detail below, the data content table and the foreign key table are each populated based on one or more data files (source files) and user input. In some examples, a data file includes a content table having a plurality of columns and rows, where at least a portion of the columns and rows are populated with data values. In some implementations, a user interface can be provided (e.g., can be displayed on the computing device 102 of FIG. 1) that enables a user to associate leaf nodes of a data model with columns of the content table. In some examples, the data content table and the foreign key table are automatically populated based on the associations provided by the user input. In some examples, the populated data model provides an ETL for populating a database for use (e.g., querying).

In some implementations, the user interface comprises a drag-and-drop interface that displays the data model and content tables of the one or more data files. In some examples, the user can select (e.g., click on) a leaf node of the data model and can drag the leaf node to a column of a content table and can drop (e.g., unclick) the leaf node on the column. In this manner, the user input (e.g., the drag and drop of the leaf node on the column) indicates that the data values stored in the selected column are to be associated with the selected leaf node. Similarly, the user can select a foreign key node of the data model and can drag the foreign key node to a column (e.g., the OID column 302a) of the foreign key table and can drop the foreign key node on the column, and can select a key node of the data model and can drag the key node to a column (e.g., the ReferenceOID column 324a) of the foreign key table and can drop the key node on the column. In some examples, the user can select columns (e.g., a column header) and can drag-and-drop the column to nodes of the data model. In response to the user selection(s), the data content table and the foreign key table can be automatically populated based on the hierarchical tree structure of the underlying data model and the data values provided in the selected column of the content table.

With reference to the example of FIGs. 2, 3A and 3B, the data model 200 can be displayed to a user in the user interface, and a content table can be displayed to the user in the user interface. The content table can include a DOB column having one or more cells populated with DOBs. The user can select the leaf node 208j and can associate the leaf node 208j with the DOB column of the content table (e.g., drag-and-drop the leaf node onto the column). In response, the data content table 300 of FIG. 3A can be automatically populated to include data as described herein.

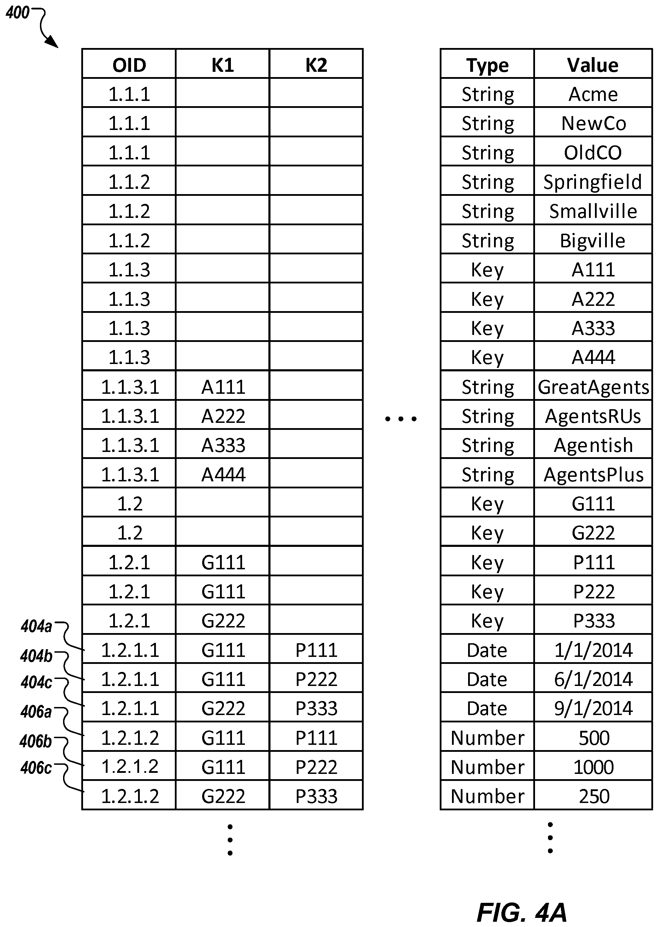

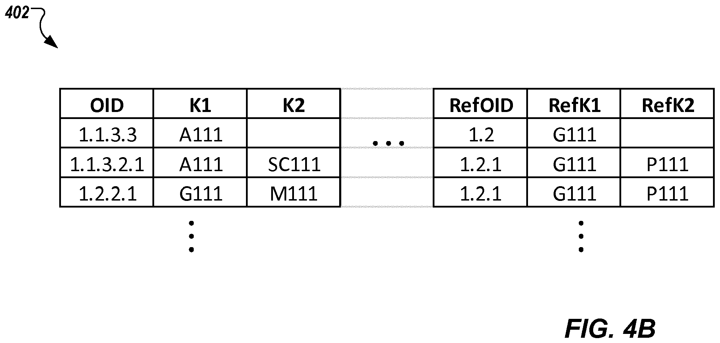

FIGs. 4A and 4B represent an example populated data model and respectively depict portions of an example data content table 400 and an example foreign key table 402 based on the example data model of FIG. 2. In some examples, the data content table 400 and the foreign key table 402 are provided based on one or more data files (source files), the example data model 200 of FIG. 2, and user input (e.g., user input assigning leaf nodes of the data model 200 to columns of a content table of the one or more data files. For example, the user can associate the leaf node 208d with a column in a content table that includes a plurality of date values (e.g., 1/1/2014, 6/1/2014, 9/1/2014). In response, rows 404a, 404b, 404c can be respectively populated to include key node values, type and data value for each instance of the data values in the column. As another example, the user can associate the leaf node 208e with a column in a content table that includes a plurality of deductible values (e.g., 500, 1000, 250). In response, rows 406a, 406b, 406c can be respectively populated to include key node values, type and data value for each instance of the data values in the column. The foreign key table 402 of FIG. 4B is populated with information associated with the foreign key nodes 206a, 206b, 206c of the data model 200, as well as information respectively associated with the key nodes 204e, 204f, to which the foreign key nodes respectively point.

In accordance with implementations of the present disclosure, one or more queries can be submitted to retrieve data stored in the populated data model. More particularly, a query can be provided and the populated data model can be traversed based on the foreign key table and the data content table to provide a result. In some examples, the result includes one or more data values. Example queries will be described based on the example of FIGs. 2, 4A and 4B described above. In some examples, to retrieve data from an OID that has one or more keys in a navigation path associated therewith, the query includes a (valid) key value for each key in the navigation path. For example, to retrieve the DOB for a person in Group G111 with Member number M111 and Suffix number S111, the populated data model is queried with OID 1.2.2.2.2 and Keys G111, M111, and S111.

As described herein, a cross-tree relationship is provided between a foreign key node and another node (e.g., a key node), to which the foreign key node points. In some examples, a keyed relationship is characterized by two actions. First, the foreign key node gives the OID (ReferenceOID) and associated keys (RefKeys) of a respective node. Second, the data from the foreign key node is used to retrieve the final target data. For example, and with continued reference to the example of FIGs. 2, 4A and 4B, to retrieve the deductible for a member M111in group G111, a query is made for the keyed relationship object 1.2.2.1 using keys G111 and M111. The foreign key node contains the target OID for the deductible amount (Reference OID 1.2.1.2) along with the keys G111 and P111 for the policy number, and this metadata is used to retrieve the target value.

In some implementations, a user interface can be provided for creating the underlying data structure (e.g., the selected data model), which includes a hierarchical tree structure. In some examples, a blank hierarchical tree structure can be provided, to which a user can add nodes and relationships between nodes. For example, a first window can be provided, within which the hierarchical tree structure can be defined based on graphical representations of nodes and relationships between nodes. A second window can be provided and can include a menu of user-selectable components. For example, the menu can include graphical representations of a node, a key node, a foreign key node, a hierarchical relationship and a foreign key relationship. In some examples, the user can select a component form the menu to provide a copy of the component displayed in the first window. In some examples, and within the first window, the user can manipulate components displayed to define the hierarchical tree structure. In some examples, the user can provide node names (e.g., root, insco, corporate, address) and/or indicators of hierarchical relationships (e.g., 1, 2, 3), which can be used to provide OIDs of respective nodes (e.g., root→insco→corporate→address, 1.2.2.2.2). In some examples, the data structure (e.g., unpopulated data model) is stored in memory as a computer-readable document, and can be retrieved from memory and displayed in a user interface for providing a populated data model, as described herein.

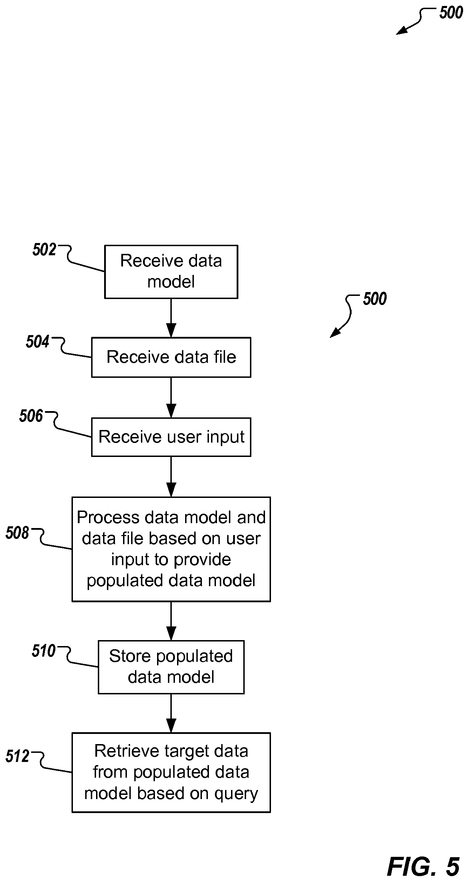

FIG. 5 depicts an example process 500 that can be executed in implementations of the present disclosure. The example process 500 can be implemented, for example, by the example environment 100 of FIG. 1. In some examples, the example process 500 can be provided by one or more computer-executable programs executed using one or more computing devices.

A data model is received (502). For example, a computer-readable file including data embodying the data model is received (e.g., by a computing device). An example data model includes the data model 200 of FIG. 2. In some examples, and as described herein, the data model includes a hierarchical tree structure having a plurality of nodes, the plurality of nodes including a plurality of data nodes, a plurality of key nodes and one or more foreign key nodes, each foreign key node referencing a respective key node. A data file is received (504). For example, the data file is provided as a computer-readable file that is received by a computing device. In some examples, the data file includes a table having a plurality of columns and a plurality of data values. Usevr input is received (506). For example, user input can be provided through an interface (e.g., the drag-and-drop interface described herein), and can be received by a computing device. In some examples, the user input associates nodes of the plurality of nodes with respective columns of the plurality of columns.

The data model and the data file are processed based on the user input to provide a populated data model (508). In some examples, and as described herein, the populated data model includes a data content table and a foreign key table. In some examples, the data content table includes one or more navigation columns and one or more content columns, at least one navigation column including one or more key values of a key node, and at least one content column comprising data values of the plurality of data values. In some examples, the foreign key table includes one or more navigation columns and one or more relationship columns. At least one navigation column includes one or more key values of a foreign key node, and the one or more relationship columns associates at least one key node of the data content table to a respective foreign key node. The populated data model is stored (510). For example, the populated data model can be stored as one or more computer-readable files within computer-readable and computer-writable memory. Target data is retrieved from the populated data model based on query (512).

In accordance with implementations of the present disclosure, and as described herein, a versatile data model, also referred to herein as a populated data model, is represented in hierarchical form expressed as nodes connected in a tree structure. In some examples, the tree structure is a metadata mechanism for traversing the data model to retrieve or store data. In some implementations, the versatile data model is stored in a plurality of statically-defined relational database tables, a data content table and foreign key table. In some examples, and as described above, the data content table includes the node-stored data values with keys according to the tree structure, and the foreign key table includes cross-branch relationships between data nodes. In some implementations, updates to the versatile data mode are exclusively represented exclusively the metadata of the hierarchical tree structure and do not require a change to the physical data schema of the relational database's data description language (DDL). More particularly, the meaning of a data element is inferred from its position in the hierarchy rather than the table/column combination in a physical data schema of a relational database. Data elements can have relationships to other data elements through the hierarchy or by a foreign key node.

Implementations of the present disclosure provide one or more of the following advantages. In some examples, implementations of the present disclosure enable updates to the data model (e.g., a change in the design of the data model) without requiring DDL changes to the hosting relational database product (e.g., SQL Server, DB2, etc.), and without requiring a user having special database design skills. Further, implementations of the present disclosure enable the data model to be updated without requiring the deletion of existing content, and/or recreation of the database.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products, i.e., one or more modules of computer program instructions encoded on a computer readable medium for execution by, or to control the operation of, data processing apparatus. The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question, *e.g*., code that constitutes processor firmware, a protocol stack, a database management system, an operating system, or a combination of one or more of them. A propagated signal is an artificially generated signal, *e.g*., a machine-generated electrical, optical, or electromagnetic signal that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand alone program or as a module, component, subroutine, or other unit suitable for use in a computing environment. A computer program does not necessarily correspond to a file in a file system. A program may be stored in a portion of a file that holds other programs or data (*e.g*., one or more scripts stored in a markup language document), in a single file dedicated to the program in question, or in multiple coordinated files (*e.g*., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry, *e.g*., an FPGA (field programmable gate array) or an ASIC (application specific integrated circuit).

Processors suitable for the execution of a computer program include, by way of example, both general and special purpose microprocessors, and any one or more processors of any appropriate kind of digital computer. Generally, a processor will receive instructions and data from a read only memory or a random access memory or both. Elements of a computer can include a processor for performing instructions and one or more memory devices for storing instructions and data. Generally, a computer will also include, or be operatively coupled to receive data from or transfer data to, or both, one or more mass storage devices for storing data, *e.g*., magnetic, magneto optical disks, or optical disks. However, a computer need not have such devices. Moreover, a computer may be embedded in another device, *e.g*., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, *e.g*., EPROM, EEPROM, and flash memory devices; magnetic disks, *e.g*., internal hard disks or removable disks; magneto optical disks; and CD ROM and DVD-ROM disks. The processor and the memory may be supplemented by, or incorporated in, special purpose logic circuitry.

To provide for interaction with a user, implementations may be realized on a computer having a display device, *e.g*., a CRT (cathode ray tube) or LCD (liquid crystal display) monitor, for displaying information to the user and a keyboard and a pointing device, *e.g*., a mouse or a trackball, by which the user may provide input to the computer. Other kinds of devices may be used to provide for interaction with a user as well; for example, feedback provided to the user may be any appropriate form of sensory feedback, *e.g*., visual feedback, auditory feedback, or tactile feedback; and input from the user may be received in any appropriate form, including acoustic, speech, or tactile input.

Implementations may be realized in a computing system that includes a back end component, *e.g*., as a data server, or that includes a middleware component, *e.g*., an application server, or that includes a front end component, *e.g*., a client computer having a graphical user interface or a Web browser through which a user may interact with an implementation, or any appropriate combination of one or more such back end, middleware, or front end components. The components of the system may be interconnected by any appropriate form or medium of digital data communication, *e.g*., a communication network. Examples of communication networks include a local area network ("LAN") and a wide area network ("WAN"), *e.g*., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

## Claims

1. A computer-implemented method for modeling data, the method being executed by one or more processors and comprising:
receiving, by the one or more processors, a data model (200), the data model comprising a hierarchical tree structure including a plurality of nodes (202, 204a-i, 208a-l, 206a-c), the plurality of nodes comprising a plurality of data nodes (208a-l), a plurality of key nodes (204c-h) and one or more foreign key nodes (206a-c), each foreign key node referencing a respective key node, wherein hierarchical relationships are provided between nodes, and respective keyed relationships are provided between foreign key nodes (206a-c) and respective key nodes (204c-h);
receiving, by the one or more processors, a data file, the data file comprising a content table having a plurality of columns and a plurality of data values;
providing, by the one or more processors, a drag-and-drop user interface that displays the data model and content table;
receiving, by the one or more processors, user input, the user input associating nodes of the plurality of nodes with respective columns of the plurality of columns, wherein user input is received through the drag-and-drop user interface, through which a user selects and drags nodes from a graphical depiction of the data model (200) and drops the selected nodes on respective columns of a graphical depiction of the data file to associate columns of the data file with respective nodes in the data model (200);
processing the data model (200), the data file and the user input to provide a populated data model, the populated data model comprising:
a data content table (300) having one or more navigation columns (302) comprising a plurality of key columns (302b) and one or more content columns (304), at least one navigation column (302) comprising one or more key values of a key node, wherein each key value indicates a keyed relationship that relates a first node of the plurality of nodes to a second node of the plurality of nodes, wherein a data value from the first node is used to retrieve target data, and at least one content column (304) comprising data values of the plurality of data values, wherein, within the data content table (300) and for a particular row (306) , a plurality of navigation columns (302) comprise respective key values of respective key nodes (204e-h) in an order based on a navigation path within the hierarchical tree structure (200), and
a foreign key table (320) having one or more navigation columns (322) comprising one or more key columns (322b) and one or more relationship columns (324), at least one navigation column (322) comprising one or more key values of a foreign key node, and the one or more relationship columns (324) associating at least one key node of the data content table to a respective foreign key node, wherein within the foreign key table and for a particular row (326), a plurality of navigation columns comprise respective key values of respective foreign key nodes (204c-d) in an order based on a navigation path within the hierarchical tree structure
wherein processing the data model (200) is performed in response to the received user input and comprises automatically populating the data content table (300) and the foreign key table (320) based on the hierarchical tree structure of the data model (200) and data values in the respective columns of the graphical depiction of the data file, comprising:
populating cells of the plurality of key columns (302b, 322b) with key values in order as one or more key nodes are encountered along a navigation path in the hierarchical tree structure to a respective selected node from the graphical depiction of the data model (200); and
storing the populated data model.

2. The method of claim 1, further comprising retrieving target data from the stored populated data model based on a received query, wherein
the received query comprises an object identifier and a respective key value for each of a plurality of additional key nodes in a navigation path associated with the object identifier; and
the target data comprises at least one data value retrieved from the populated data model, the at least one data value corresponding to the key values included in the received query.

3. The method of claim 1, wherein:
the received query comprises an object identifier and a respective key value for each of a plurality of additional key nodes in a navigation path associated with the object identifier;
the plurality of additional key nodes comprises at least one foreign key node;
the target data comprises at least on data value retrieved from the populated data model, the at least one data value corresponding to the key values included in the received query; and
retrieving the target data from the populated data model comprises retrieving the at least one data value using at least one target object identifier that is included in the at least one foreign key node.

4. The method of claim 1, further comprising:
receiving updated metadata describing the hierarchical tree structure; and
updating the populated data model based on the updated metadata.

5. The method of claim 1, wherein the data value of the first node contains an identifier assigned to the second node and metadata for retrieving the target data.

6. The method of claim 1, wherein each node of the plurality of nodes has a respective identifier, the identifier representing a navigation path to the respective node in the hierarchical tree structure.

7. A non-transitory computer-readable storage medium coupled to one or more processors and having instructions stored thereon which, when executed by the one or more processors, cause the one or more processors to perform operations for modeling data, the operations comprising:
receiving a data model (200), the data model comprising a hierarchical tree structure including a plurality of nodes, the plurality of nodes comprising a plurality of data nodes (208a-l), a plurality of key nodes (204c-h) and one or more foreign key nodes (206a-c), each foreign key node referencing a respective key node, wherein hierarchical relationships are provided between nodes, and respective keyed relationships are provided between foreign key nodes (206a-c) and respective key nodes (204c-h);
receiving a data file, the data file comprising a content table having a plurality of columns and a plurality of data values;
providing, by the one or more processors, a drag-and-drop user interface that displays the data model and content table;
receiving user input, the user input associating nodes of the plurality of nodes with respective columns of the plurality of columns, wherein user input is received through the drag-and-drop user interface, through which a user selects and drags nodes from a graphical depiction of the data model (200) and drops the selected nodes on respective columns of a graphical depiction of the data file to associate columns of the data file with respective nodes in the data model (200); and
processing the data model (200), the data file and the user input to provide a populated data model, the populated data model comprising:
a data content table (400) having one or more navigation columns comprising a plurality of key columns (302b) and one or more content columns, at least one navigation column comprising one or more key values of a key node, wherein each key value indicates a keyed relationship that relates a first node of the plurality of nodes to a second node of the plurality of nodes, wherein a data value from the first node is used to retrieve target data, and at least one content column comprising data values of the plurality of data values,
wherein, within the data content table and for a particular row, a plurality of navigation columns comprise respective key values of respective key nodes (204c-h) in an order based on a navigation path within the hierarchical tree structure, and
a foreign key table (402) having one or more navigation columns comprising one or more key columns (322b) and one or more relationship columns, at least one navigation column comprising one or more key values of a foreign key node, and the one or more relationship columns associating at least one key node of the data content table to a respective foreign key node, wherein within the foreign key table and for a particular row, a plurality of navigation columns comprise respective key values of respective foreign key nodes (206a-c) in an order based on a navigation path within the hierarchical tree structure
wherein processing the data model (200) is performed in response to the received user input and comprises automatically populating the data content table (300) and the foreign key table (320) based on the hierarchical tree structure of the data model (200) and data values in the respective columns of the graphical depiction of the data file, comprising:
populating cells of the plurality of key columns (302b, 322b) with key values in order as one or more key nodes are encountered along a navigation path in the hierarchical tree structure to a respective selected node from the graphical depiction of the data model (200); and
storing the populated data model.

8. The computer-readable storage medium of claim 7, wherein the operations further comprise retrieving target data from the populated data model based on a received query, wherein
the received query comprises an object identifier and a respective key value for each of a plurality of additional key nodes in a navigation path associated with the object identifier; and
the target data comprises at least one data value retrieved from the populated data model, the at least one data value corresponding to the key values included in the received query.

9. The computer-readable storage medium of claim 7, wherein:
the received query comprises an object identifier and a respective key value for each of a plurality of additional key nodes in a navigation path associated with the object identifier;
the plurality of additional key nodes comprises at least one foreign key node;
the target data comprises at least on data value retrieved from the populated data model, the at least one data value corresponding to the key values included in the received query; and
retrieving the target data from the populated data model comprises retrieving the at least one data value using at least one target object identifier that is included in the at least one foreign key node.

10. The computer-readable storage medium of claim 7, further comprising:
receiving updated metadata describing the hierarchical tree structure; and
updating the populated data model based on the updated metadata.

11. The computer-readable storage medium of claim 7, wherein the data value of the first node contains an identifier assigned to the second node and metadata for retrieving the target data.

12. The computer-readable storage medium of claim 7, wherein each node of the plurality of nodes has a respective identifier, the identifier representing a navigation path to the respective node in the hierarchical tree structure.

13. A system, comprising:
one or more processors; and
the computer-readable storage medium according to any one of claims 7 to 12 coupled to the one or more processors.

## Patentansprüche

1. Computerimplementiertes Verfahren zum Modellieren von Daten, wobei das Verfahren durch einen oder mehrere Prozessoren ausgeführt wird und Folgendes umfasst:
Empfangen eines Datenmodells (200) durch den einen oder die mehreren Prozessoren, wobei das Datenmodell eine hierarchische Baumstruktur umfasst, die eine Vielzahl von Knoten (202, 204a-i, 208a-l, 206a-c) beinhaltet, wobei die Vielzahl von Knoten eine Vielzahl von Datenknoten (208a-l), eine Vielzahl von Schlüsselknoten (204c-h) und einen oder mehrere fremde Schlüsselknoten (206a-c) umfasst, wobei jeder fremde Schlüsselknoten einen jeweiligen Schlüsselknoten referenziert, wobei zwischen Knoten hierarchische Beziehungen bereitgestellt sind und zwischen fremden Schlüsselknoten (206a-c) und jeweiligen Schlüsselknoten (204c-h) jeweilige schlüsselgebundene Beziehungen bereitgestellt sind;
Empfangen einer Datendatei durch den einen oder die mehreren Prozessoren, wobei die Datendatei eine Inhaltstabelle mit einer Vielzahl von Spalten und einer Vielzahl von Datenwerten umfasst;
Bereitstellen einer Drag-and-Drop-Benutzerschnittstelle, die das Datenmodell und die Inhaltstabelle anzeigt, durch den einen oder die mehreren Prozessoren;
Empfangen einer Benutzereingabe durch den einen oder die mehreren Prozessoren, wobei die Benutzereingabe Knoten von der Vielzahl von Knoten mit jeweiligen Spalten von der Vielzahl von Spalten assoziiert, wobei die Benutzereingabe über die Drag-and-Drop-Benutzerschnittstelle empfangen wird, über die ein Benutzer Knoten aus einer grafischen Abbildung des Datenmodells (200) auswählt und die ausgewählten Knoten auf jeweilige Spalten einer grafischen Abbildung der Datendatei zieht und an den jeweiligen Spalten ablegt, um Spalten der Datendatei mit jeweiligen Knoten im Datenmodell (200) zu assoziieren;
Verarbeiten des Datenmodells (200), der Datendatei und der Benutzereingabe, um ein aufgefülltes Datenmodell bereitzustellen, wobei das aufgefüllte Datenmodell Folgendes umfasst:
eine Dateninhaltstabelle (300) mit einer oder mehreren Navigationsspalten (302), die eine Vielzahl von Schlüsselspalten (302b) umfassen, und einer oder mehreren Inhaltsspalten (304), wobei mindestens eine Navigationsspalte (302) einen oder mehrere Schlüsselwerte eines Schlüsselknotens umfasst, wobei jeder Schlüsselwert eine schlüsselgebundene Beziehung angibt, die einen ersten Knoten von der Vielzahl von Knoten zu einem zweiten Knoten von der Vielzahl von Knoten in Beziehung setzt, wobei ein Datenwert vom ersten Knoten zum Abrufen von Zieldaten verwendet wird, und wobei mindestens eine Inhaltsspalte (304) Datenwerte von der Vielzahl von Datenwerten umfasst, wobei eine Vielzahl von Navigationsspalten (302) innerhalb der Dateninhaltstabelle (300) und für eine bestimmte Zeile (306) jeweilige Schlüsselwerte jeweiliger Schlüsselknoten (204e-h) in einer auf einem Navigationspfad innerhalb der hierarchischen Baumstruktur (200) basierenden Reihenfolge umfasst, und
eine Fremdschlüsseltabelle (320) mit einer oder mehreren Navigationsspalten (322), die eine oder mehrere Schlüsselspalten (322b) umfassen, und einer oder mehreren Beziehungsspalten (324), wobei mindestens eine Navigationsspalte (322) einen oder mehrere Schlüsselwerte eines fremden Schlüsselknotens umfasst und die eine oder die mehreren Beziehungsspalten (324) mindestens einen Schlüsselknoten der Dateninhaltstabelle mit einem jeweiligen fremden Schlüsselknoten assoziieren, wobei eine Vielzahl von Navigationsspalten innerhalb der Fremdschlüsseltabelle und für eine bestimmte Zeile (326) jeweilige Schlüsselwerte jeweiliger fremder Schlüsselknoten (204c-d) in einer auf einem Navigationspfad innerhalb der hierarchischen Baumstruktur basierenden Reihenfolge umfasst,
wobei das Verarbeiten des Datenmodells (200) in Ansprechen auf die empfangene Benutzereingabe durchgeführt wird und automatisches Auffüllen der Dateninhaltstabelle (300) und der Fremdschlüsseltabelle (320) basierend auf der hierarchischen Baumstruktur des Datenmodells (200) und der jeweiligen Spalten der grafischen Abbildung der Datendatei mit Datenwerten umfasst, umfassend:
Auffüllen von Zellen der Vielzahl von Schlüsselspalten (302b, 322b) mit Schlüsselwerten in der Reihenfolge, in der ein oder mehrere Schlüsselknoten auf einem Navigationspfad in der hierarchischen Baumstruktur hin zu einem jeweiligen ausgewählten Knoten aus der grafischen Abbildung des Datenmodells (200) vorzufinden sind; und
Speichern des aufgefüllten Datenmodells.

2. Verfahren nach Anspruch 1, ferner umfassend Abrufen von Zieldaten aus dem gespeicherten aufgefüllten Datenmodell basierend auf einer empfangenen Abfrage, wobei
die empfangene Abfrage einen Objektbezeichner und einen jeweiligen Schlüsselwert für jeden von einer Vielzahl zusätzlicher, mit dem Objektbezeichner assoziierter Schlüsselknoten auf einem Navigationspfad umfasst; und
die Zieldaten mindestens einen aus dem aufgefüllten Datenmodell abgerufenen Datenwert umfassen, wobei der mindestens eine Datenwert mit den in der empfangenen Abfrage beinhalteten Schlüsselwerten korrespondiert.

3. Verfahren nach Anspruch 1, wobei:
die empfangene Abfrage einen Objektbezeichner und einen jeweiligen Schlüsselwert für jeden von einer Vielzahl zusätzlicher, mit dem Objektbezeichner assoziierter Schlüsselknoten auf einem Navigationspfad umfasst;
die Vielzahl zusätzlicher Schlüsselknoten mindestens einen fremden Schlüsselknoten umfasst;
die Zieldaten mindestens einen aus dem aufgefüllten Datenmodell abgerufenen Datenwert umfassen, wobei der mindestens eine Datenwert mit den in der empfangenen Abfrage beinhalteten Schlüsselwerten korrespondiert; und
das Abrufen der Zieldaten aus dem aufgefüllten Datenmodell Abrufen des mindestens einen Datenwerts unter Nutzung mindestens eines Zielobjektbezeichners, der in dem mindestens einen fremden Schlüsselknoten beinhaltet ist, umfasst.

4. Verfahren nach Anspruch 1, ferner umfassend:
Empfangen aktualisierter Metadaten, die die hierarchische Baumstruktur beschreiben; und
Aktualisieren des aufgefüllten Datenmodells basierend auf den aktualisierten Metadaten.

5. Verfahren nach Anspruch 1, wobei der Datenwert des ersten Knotens einen dem zweiten Knoten zugewiesenen Bezeichner und Metadaten zum Abrufen der Zieldaten enthält.

6. Verfahren nach Anspruch 1, wobei jeder Knoten von der Vielzahl von Knoten einen jeweiligen Bezeichner aufweist, wobei der Bezeichner einen Navigationspfad hin zu dem jeweiligen Knoten in der hierarchischen Baumstruktur darstellt.

7. Nicht transientes, computerlesbares Speichermedium, das an einen oder mehrere Prozessoren gekoppelt ist und darauf gespeicherte Anweisungen aufweist, die bei der Ausführung durch den einen oder die mehreren Prozessoren bewirken, dass der eine oder die mehreren Prozessoren Vorgänge zum Modellieren von Daten durchführen, wobei die Vorgänge Folgendes umfassen:
Empfangen eines Datenmodells (200), wobei das Datenmodell eine hierarchische Baumstruktur umfasst, die eine Vielzahl von Knoten beinhaltet, wobei die Vielzahl von Knoten eine Vielzahl von Datenknoten (208a-1), eine Vielzahl von Schlüsselknoten (204c-h) und einen oder mehrere fremde Schlüsselknoten (206a-c) umfasst, wobei jeder fremde Schlüsselknoten einen jeweiligen Schlüsselknoten referenziert, wobei zwischen Knoten hierarchische Beziehungen bereitgestellt sind und zwischen fremden Schlüsselknoten (206a-c) und jeweiligen Schlüsselknoten (204c-h) jeweilige schlüsselgebundene Beziehungen bereitgestellt sind;
Empfangen einer Datendatei, wobei die Datendatei eine Inhaltstabelle mit einer Vielzahl von Spalten und einer Vielzahl von Datenwerten umfasst;
Bereitstellen einer Drag-and-Drop-Benutzerschnittstelle, die das Datenmodell und die Inhaltstabelle anzeigt, durch den einen oder die mehreren Prozessoren;
Empfangen einer Benutzereingabe, wobei die Benutzereingabe Knoten von der Vielzahl von Knoten mit jeweiligen Spalten von der Vielzahl von Spalten assoziiert, wobei die Benutzereingabe über die Drag-and-Drop-Benutzerschnittstelle empfangen wird, über die ein Benutzer Knoten aus einer grafischen Abbildung des Datenmodells (200) auswählt und die ausgewählten Knoten auf jeweilige Spalten einer grafischen Abbildung der Datendatei zieht und an den jeweiligen Spalten ablegt, um Spalten der Datendatei mit jeweiligen Knoten im Datenmodell (200) zu assoziieren; und
Verarbeiten des Datenmodells (200), der Datendatei und der Benutzereingabe, um ein aufgefülltes Datenmodell bereitzustellen, wobei das aufgefüllte Datenmodell Folgendes umfasst:
eine Dateninhaltstabelle (400) mit einer oder mehreren Navigationsspalten, die eine Vielzahl von Schlüsselspalten (302b) umfassen, und einer oder mehreren Inhaltsspalten, wobei mindestens eine Navigationsspalte einen oder mehrere Schlüsselwerte eines Schlüsselknotens umfasst, wobei jeder Schlüsselwert eine schlüsselgebundene Beziehung angibt, die einen ersten Knoten von der Vielzahl von Knoten zu einem zweiten Knoten von der Vielzahl von Knoten in Beziehung setzt, wobei ein Datenwert vom ersten Knoten zum Abrufen von Zieldaten verwendet wird, und wobei mindestens eine Inhaltsspalte Datenwerte von der Vielzahl von Datenwerten umfasst,
wobei eine Vielzahl von Navigationsspalten innerhalb der Dateninhaltstabelle und für eine bestimmte Zeile jeweilige Schlüsselwerte jeweiliger Schlüsselknoten (204c-h) in einer auf einem Navigationspfad innerhalb der hierarchischen Baumstruktur basierenden Reihenfolge umfasst, und
eine Fremdschlüsseltabelle (402) mit einer oder mehreren Navigationsspalten, die eine oder mehrere Schlüsselspalten (322b) umfassen, und einer oder mehreren Beziehungsspalten, wobei mindestens eine Navigationsspalte einen oder mehrere Schlüsselwerte eines fremden Schlüsselknotens umfasst und die eine oder die mehreren Beziehungsspalten mindestens einen Schlüsselknoten der Dateninhaltstabelle mit einem jeweiligen fremden Schlüsselknoten assoziieren, wobei eine Vielzahl von Navigationsspalten innerhalb der Fremdschlüsseltabelle und für eine bestimmte Zeile jeweilige Schlüsselwerte jeweiliger fremder Schlüsselknoten (206a-c) in einer auf einem Navigationspfad innerhalb der hierarchischen Baumstruktur basierenden Reihenfolge umfasst,
wobei das Verarbeiten des Datenmodells (200) in Ansprechen auf die empfangene Benutzereingabe durchgeführt wird und automatisches Auffüllen der Dateninhaltstabelle (300) und der Fremdschlüsseltabelle (320) basierend auf der hierarchischen Baumstruktur des Datenmodells (200) und der jeweiligen Spalten der grafischen Abbildung der Datendatei mit Datenwerten umfasst, umfassend:
Auffüllen von Zellen der Vielzahl von Schlüsselspalten (302b, 322b) mit Schlüsselwerten in der Reihenfolge, in der ein oder mehrere Schlüsselknoten auf einem Navigationspfad in der hierarchischen Baumstruktur hin zu einem jeweiligen ausgewählten Knoten aus der grafischen Abbildung des Datenmodells (200) vorzufinden sind; und
Speichern des aufgefüllten Datenmodells.

8. Computerlesbares Speichermedium nach Anspruch 7, wobei die Vorgänge ferner Abrufen von Zieldaten aus dem aufgefüllten Datenmodell basierend auf einer empfangenen Abfrage umfassen, wobei
die empfangene Abfrage einen Objektbezeichner und einen jeweiligen Schlüsselwert für jeden von einer Vielzahl zusätzlicher, mit dem Objektbezeichner assoziierter Schlüsselknoten auf einem Navigationspfad umfasst; und
die Zieldaten mindestens einen aus dem aufgefüllten Datenmodell abgerufenen Datenwert umfassen, wobei der mindestens eine Datenwert mit den in der empfangenen Abfrage beinhalteten Schlüsselwerten korrespondiert.

9. Computerlesbares Speichermedium nach Anspruch 7, wobei:
die empfangene Abfrage einen Objektbezeichner und einen jeweiligen Schlüsselwert für jeden von einer Vielzahl zusätzlicher, mit dem Objektbezeichner assoziierter Schlüsselknoten auf einem Navigationspfad umfasst;
die Vielzahl zusätzlicher Schlüsselknoten mindestens einen fremden Schlüsselknoten umfasst;
die Zieldaten mindestens einen aus dem aufgefüllten Datenmodell abgerufenen Datenwert umfassen, wobei der mindestens eine Datenwert mit den in der empfangenen Abfrage beinhalteten Schlüsselwerten korrespondiert; und
das Abrufen der Zieldaten aus dem aufgefüllten Datenmodell Abrufen des mindestens einen Datenwerts unter Nutzung mindestens eines Zielobjektbezeichners, der in dem mindestens einen fremden Schlüsselknoten beinhaltet ist, umfasst.

10. Computerlesbares Speichermedium nach Anspruch 7, ferner umfassend:
Empfangen aktualisierter Metadaten, die die hierarchische Baumstruktur beschreiben; und
Aktualisieren des aufgefüllten Datenmodells basierend auf den aktualisierten Metadaten.

11. Computerlesbares Speichermedium nach Anspruch 7, wobei der Datenwert des ersten Knotens einen dem zweiten Knoten zugewiesenen Bezeichner und Metadaten zum Abrufen der Zieldaten enthält.

12. Computerlesbares Speichermedium nach Anspruch 7, wobei jeder Knoten von der Vielzahl von Knoten einen jeweiligen Bezeichner aufweist, wobei der Bezeichner einen Navigationspfad hin zu dem jeweiligen Knoten in der hierarchischen Baumstruktur darstellt.

13. System, umfassend:
einen oder mehrere Prozessoren; und
das computerlesbare Speichermedium nach einem der Ansprüche 7 bis 12, das an den einen oder die mehreren Prozessoren gekoppelt ist.

## Revendications

1. Procédé mis en oeuvre par ordinateur pour modéliser des données, le procédé étant exécuté par un ou plusieurs processeurs et comprenant les étapes suivantes :
recevoir, par les un ou plusieurs processeurs, un modèle de données (200), le modèle de données comprenant une structure arborescente hiérarchique comprenant une pluralité de noeuds (202, 204a-i, 208a-l, 206a-c), la pluralité de noeuds comprenant une pluralité de noeuds de données (208a-l), une pluralité de noeuds de clé (204c-h) et un ou plusieurs noeuds de clé étrangers (206a-c), chaque noeud de clé étrangers faisant référence à un noeud de clé respectif, où des relations hiérarchiques sont pourvues entre les noeuds, et des relations à clés respectives sont pourvues entre des noeuds de clé étrangers (206a-c) et des noeuds de clé respectifs (204c-h) ;
recevoir, par un ou plusieurs processeurs, un fichier de données, le fichier de données comprenant une table de contenu ayant une pluralité de colonnes et une pluralité de valeurs de données ;
fournir, par les un ou plusieurs processeurs, une interface utilisateur de type glisser-déposer qui affiche le modèle de données et la table de contenu ;
recevoir, par les un ou plusieurs processeurs, une entrée utilisateur, l'entrée utilisateur associant des noeuds de la pluralité de noeuds avec des colonnes respectives de la pluralité de colonnes, où l'entrée utilisateur est reçue par l'interface utilisateur de type glisser-déposer, à travers laquelle un utilisateur sélectionne et fait glisser des noeuds à partir d'une représentation graphique du modèle de données (200) et dépose les noeuds sélectionnés sur des colonnes respectives d'une représentation graphique du fichier de données pour associer des colonnes du fichier de données avec des noeuds respectifs dans le modèle de données (200) ;
traiter le modèle de données (200), le fichier de données et l'entrée utilisateur pour fournir un modèle de données rempli, le modèle de données rempli comprenant :
une table de contenu de données (300) ayant une ou plusieurs colonnes de navigation (302) comprenant une pluralité de colonnes de clés (302b) et une ou plusieurs colonnes de contenu (304), au moins une colonne de navigation (302) comprenant une ou plusieurs valeurs de clés d'un noeud de clé, où chaque valeur de clé indique une relation à clés qui relie un premier noeud de la pluralité de noeuds à un second noeud de la pluralité de noeuds, où une valeur de données du premier noeud est utilisée pour récupérer des données cibles, et au moins une colonne de contenu (304) comprenant des valeurs de données de la pluralité de valeurs de données, où, dans la table de contenu de données (300) et pour une rangée particulière (306), une pluralité de colonnes de navigation (302) comprennent des valeurs de clés respectives de noeuds de clé respectifs (204e-h) dans un ordre basé sur un chemin de navigation à l'intérieur de la structure arborescente hiérarchique (200), et
une table de clés étrangère (320) ayant une ou plusieurs colonnes de navigation (322) comprenant une ou plusieurs colonnes de clés (322b) et une ou plusieurs colonnes de relations (324), au moins une colonne de navigation (322) comprenant une ou plusieurs valeurs de clés d'un noeud de clé étranger, et les une ou plusieurs colonnes de relations (324) associant au moins un noeud de clé de la table de contenu de données à un noeud de clé étranger respectif où, dans la table de clés étrangère et pour une rangée particulière (326), une pluralité de colonnes de navigation comprennent des valeurs de clés respectives de noeuds de clé étrangers respectifs (204c-d) dans un ordre basé sur un chemin de navigation à l'intérieur de la structure arborescente hiérarchique
où le traitement du modèle de données (200) est effectué en réponse à l'entrée utilisateur reçue et comprend de remplir automatiquement la table de contenu de données (300) et la table de clés étrangère (320) sur la base de la structure arborescente hiérarchique du modèle de données (200) et des valeurs de données dans les colonnes respectives de la représentation graphique du fichier de données, comprenant les étapes suivantes :
remplir les cellules de la pluralité de colonnes de clés (302b, 322b) avec des valeurs de clés dans l'ordre à mesure qu'un ou plusieurs noeuds de clé sont rencontrés le long d'un chemin de navigation dans la structure arborescence hiérarchique jusqu'à un noeud sélectionné respectif à partir de la représentation graphique du modèle de données (200) ; et
stocker le modèle de données rempli.

2. Procédé selon la revendication 1, comprenant en outre de récupérer des données cibles à partir du modèle de données rempli stocké sur la base d'une requête reçue, où
la requête reçue comprend un identificateur d'objet et une valeur de clé respective pour chacun d'une pluralité de noeuds de clé supplémentaires dans un chemin de navigation associé à l'identificateur d'objet ; et
les données cibles comprennent au moins une valeur de données récupérée du modèle de données rempli, l'au moins une valeur de données correspondant aux valeurs de clés incluses dans la requête reçue.

3. Procédé selon la revendication 1, dans lequel :
la requête reçue comprend un identificateur d'objet et une valeur de clé respective pour chacun d'une pluralité de noeuds de clé supplémentaires dans un chemin de navigation associé à l'identificateur d'objet ;
la pluralité de noeuds de clé supplémentaires comprend au moins un noeud de clé étranger ;
les données cibles comprennent au moins une valeur de données récupérée du modèle de données rempli, l'au moins une valeur de données correspondant aux valeurs de clés incluses dans la requête reçue ; et
la récupération des données cibles à partir du modèle de données rempli comprend de récupérer l'au moins une valeur de données en utilisant au moins un identificateur d'objet cible qui est inclus dans l'au moins un noeud de clé étranger.

4. Procédé selon la revendication 1, comprenant en outre les étapes suivantes :
recevoir des métadonnées mises à jour décrivant la structure arborescente hiérarchique ; et
mettre à jour le modèle de données rempli sur la base des métadonnées mises à jour.

5. Procédé selon la revendication 1, dans lequel la valeur de données du premier noeud contient un identificateur assigné au second noeud et des métadonnées pour récupérer les données cibles.

6. Procédé selon la revendication 1, dans lequel chaque noeud de la pluralité de noeuds a un identificateur respectif, l'identificateur représentant un chemin de navigation vers le noeud respectif dans la structure arborescente hiérarchique.

7. Support de stockage non transitoire lisible par ordinateur couplé à un ou plusieurs processeurs et sur lequel sont stockées des instructions qui, lorsqu'elles sont exécutées par les un ou plusieurs processeurs, amènent les un ou plusieurs processeurs à exécuter des opérations de modélisation de données, les opérations comprenant les étapes suivantes :
recevoir un modèle de données (200), le modèle de données comprenant une structure arborescente hiérarchique comprenant une pluralité de noeuds de données (208a-l), une pluralité de noeuds de clé (204c-h) et un ou plusieurs noeuds de clé étrangers (206a-c), chaque noeud de clé étranger faisant référence à un noeud de clé respectif, où des relations hiérarchiques sont pourvues entre les noeuds, et des relations à clés respectives sont pourvues entre des noeuds de clé étrangers (206a-c) et des noeuds de clé respectifs (204c-h) ;
recevoir un fichier de données, le fichier de données comprenant une table de contenu ayant une pluralité de colonnes et une pluralité de valeurs de données ;
fournir, par un ou plusieurs processeurs, une interface utilisateur de type glisser-déposer qui affiche le modèle de données et la table de contenu ;
recevoir une entrée utilisateur, l'entrée utilisateur associant des noeuds de la pluralité de noeuds avec des colonnes respectives de la pluralité de colonnes, où l'entrée utilisateur est reçue par l'interface utilisateur de type glisser-déposer, à travers laquelle un utilisateur sélectionne et fait glisser des noeuds à partir d'une représentation graphique du modèle de données (200) et dépose les noeuds sélectionnés sur des colonnes respectives d'une représentation graphique du fichier de données pour associer des colonnes du fichier de données avec des noeuds respectifs dans le modèle de données (200) ; et
traiter le modèle de données (200), le fichier de données et l'entrée utilisateur pour fournir un modèle de données rempli, le modèle de données rempli comprenant :
une table de contenu de données (400) ayant une ou plusieurs colonnes de navigation comprenant une pluralité de colonnes de clés (302b) et une ou plusieurs colonnes de contenu, au moins une colonne de navigation comprenant une ou plusieurs valeurs de clés d'un noeud de clé, où chaque valeur de clé indique une relation à clés qui relie un premier noeud de la pluralité de noeuds à un deuxième noeud de la pluralité de noeuds, où une valeur de données du premier noeud est utilisée pour récupérer des données cibles, et au moins une colonne de contenu comprenant des valeurs de données de la pluralité de valeurs de données,
où, dans la table de contenu de données et pour une rangée particulière, une pluralité de colonnes de navigation comprennent des valeurs de clés respectives de noeuds de clé respectifs (204c-h) dans un ordre basé sur un chemin de navigation à l'intérieur de la structure arborescente hiérarchique, et
une table de clés étrangère (402) ayant une ou plusieurs colonnes de navigation comprenant une ou plusieurs colonnes de clés (322b) et une ou plusieurs colonnes de relations, au moins une colonne de navigation comprenant une ou plusieurs valeurs de clés d'un noeud de clé étranger, et les une ou plusieurs colonnes de relations associant au moins un noeud de clé de la table de contenu de données à un noeud de clé étranger respectif où, dans la table de clés étrangère et pour une rangée particulière, une pluralité de colonnes de navigation comprennent des valeurs de clés respectives de noeuds de clé étrangers respectifs (206a-c) dans un ordre basé sur un chemin de navigation à l'intérieur de la structure arborescente hiérarchique,
où le traitement du modèle de données (200) est effectué en réponse à l'entrée utilisateur reçue et comprend de remplir automatiquement la table de contenu de données (300) et la table de clés étrangère (320) sur la base de la structure arborescente hiérarchique du modèle de données (200) et des valeurs de données dans les colonnes respectives de la représentation graphique du fichier de données, comprenant les étapes suivantes :
remplir les cellules de la pluralité de colonnes de clés (302b, 322b) avec des valeurs de clés dans l'ordre à mesure qu'un ou plusieurs noeuds clés sont rencontrés le long d'un chemin de navigation dans la structure arborescence hiérarchique jusqu'à un noeud sélectionné respectif à partir de la représentation graphique du modèle de données (200) ; et
stocker le modèle de données rempli.

8. Support de stockage lisible par ordinateur selon la revendication 7, dans lequel les opérations comprennent en outre de récupérer des données cibles à partir du modèle de données rempli sur la base d'une requête reçue, où
la requête reçue comprend un identificateur d'objet et une valeur de clé respective pour chacun d'une pluralité de noeuds de clé supplémentaires dans un chemin de navigation associé à l'identificateur d'objet ; et
les données cibles comprennent au moins une valeur de données récupérée du modèle de données rempli, l'au moins une valeur de données correspondant aux valeurs de clés incluses dans la requête reçue.

9. Support de stockage lisible par ordinateur selon la revendication 7, dans lequel :
la requête reçue comprend un identificateur d'objet et une valeur de clé respective pour chacun d'une pluralité de noeuds de clé supplémentaires dans un chemin de navigation associé à l'identificateur d'objet ;
la pluralité de noeuds de clé supplémentaires comprend au moins un noeud de clé étranger ;
les données cibles comprennent au moins une valeur de données récupérée du modèle de données rempli, l'au moins une valeur de données correspondant aux valeurs de clés incluses dans la requête reçue ; et
la récupération des données cibles à partir du modèle de données rempli comprend de récupérer l'au moins une valeur de données en utilisant au moins un identificateur d'objet cible qui est inclus dans l'au moins un noeud de clé étranger.

10. Support de stockage lisible par ordinateur selon la revendication 7, comprenant en outre les étapes suivantes :
recevoir des métadonnées mises à jour décrivant la structure arborescente hiérarchique ; et
mettre à jour le modèle de données rempli sur la base des métadonnées mises à jour.

11. Support de stockage lisible par ordinateur selon la revendication 7, dans lequel la valeur de données du premier noeud contient un identificateur assigné au second noeud et des métadonnées pour récupérer les données cibles.

12. Support de stockage lisible par ordinateur selon la revendication 7, dans lequel chaque noeud de la pluralité de noeuds a un identificateur respectif, l'identificateur représentant un chemin de navigation vers le noeud respectif dans la structure arborescente hiérarchique.

13. Système, comprenant :
un ou plusieurs processeurs ; et
le support de stockage lisible par ordinateur selon l'une quelconque des revendications 7 à 12 couplé aux un ou plusieurs processeurs.
